# EUROPEAN PATENT APPLICATION

(11) **EP 4 108 519 A1**
(43) Date of publication of application: **28.12.2022**
(21) Application number: 21181194.8
(22) Date of filing: 23.06.2021
(51) Int. Cl.: B60N 2/42, B60N 2/427, B60N 2/16

(54) **VEHICLE SEAT USING A SEAT RESTRAINT SYSTEM, AND METHOD OF RESTRAINING A PIVOTAL FORWARD MOVEMENT OF A SEAT FRAME**

(71) Applicant: Autoliv Development AB, 447 83 Vargarda (SE)
(72) Inventor: JANSSON, Anders, 447 83 Vårgårda (SE); VISHWANATHA, Abhiroop, 447 83 Vårgårda (SE)
(74) Representative: AWA Sweden AB

(57) **Abstract**

A vehicle seat (1) with a seat restraint system (100) is provided. The vehicle seat (1) comprising a seat frame (2) which is adjustable in a height direction and in a longitudinal direction; a stopper (101); and a restriction arrangement (102) comprising a piston (103). The restriction arrangement (102) is configured to, upon an activation signal, move the piston (103) from a retracted position to an extended position in which a free end of the piston (103) abuts the stopper, thereby restricting a pivotal movement of a front end portion (104) of the seat frame (2). Also, a method of restraining a pivotal forward movement of the front-end portion of a seat frame (2) is provided.

## Description

### Technical field

The present invention relates to a seat restraint system for use in a vehicle seat, a vehicle seat using such seat restraint system and a method of restraining a pivotal forward movement of the front-end portion of a seat frame.

### Technical background

More or less all vehicle seats in motor vehicles are today provided with a seat belt. The seat belt is typically attached to the vehicle body with two connecting points to the floor and one connecting point to the B-pillar. Thereby the inherent rigidity of the vehicle body is used to absorb loads in the event of an accident or a sudden deceleration. This principle of connecting a safety belt is however less suitable in vehicles using human assisted driving (HAD) technology. The HAD technology allows especially the driver to shift focus towards e.g. different types of entertainment systems. This is in fact already true for passengers, other than the driver, in today's vehicles. There is hence a growing demand for more comfortable vehicle seats that allow larger adjustment ranges in terms of longitudinal and height adjustments but also in terms of reclining possibilities. This will however have a negative impact on the efficiency of seat belts which are supported by the vehicle body since the connecting points no longer necessarily will correctly fit the position of the vehicle seat and the passenger to be belted. One solution is to instead attach the seat belt to the vehicle seat. There is hence a need for improvements to seat restraint systems and especially seat restraint systems which are used for vehicle seats with integrated safety belts.

### Summary of the invention

It is an object of the present invention to overcome the above described drawbacks, and to provide an improved seat restraint system.

Another object is to provide a seat restraint system that is applicable to a vehicle seat no matter if it is a vehicle seat with an integrated seat belt or a vehicle seat to be used with a seat belt which is supported by the vehicle body.

These and other objects that will be apparent from the following summary and description are achieved by a seat restraint system according to the appended claims.

According to an aspect of the present invention, there is provided a seat restraint system for use in a vehicle seat, the system comprising:
a vehicle seat comprising a seat frame which is adjustable in a height direction and in a longitudinal direction; and
a restriction arrangement comprising a piston; wherein
the restriction arrangement is configured to, upon an activation signal, move the piston from a retracted position to an extended position in which a free end of the piston abuts a stopper, thereby restricting a pivotal movement of a front end portion of the seat frame.

The seat restraint system of the present invention resides in the idea of moving a piston from a retracted position to an extended position in which extended position a free end of the piston abuts a stopper. The piston abutting the stopper may hence be seen as a supporting strut forming a physical stop in the Z-direction of the vehicle. The Z-direction is, as is well known to the skilled person, defined as the vertical direction. Thereby a downward and forward pivotal movement of the front-end portion of the seat frame, and hence a vehicle seat using such seat frame, will be restricted in the event of a frontal crash.

Especially, the seat restraint system allows a restriction or an improved control of the downward and forward pivotal movement of the front end of the vehicle seat. Such downward movement causes in turn the seat back to move forward and thereby also the point at the top of the seat back near to the shoulder of an occupant from which point the seat belt exits either from a belt guide or directly from a retractor. By reducing this forward movement, the seat belt will provide an earlier coupling of the occupant. It will also reduce the risk of so-called submarining, i.e. that the occupant' body slides under the seat belt. The seat restraint system according to the invention thereby contributes to the provision of an overall safer vehicle seat.

The seat restraint system may be configured to be activated, upon an activation signal. The activation signal is communicated from a crash sensor as a response to a detected emergency situation, such as a frontal crash, to the seat restraint system via a processor which forms part of an Electronic Control Unit (ECU) of the vehicle. The use of an ECU and different sensors is well known to the skilled person in the art.

The restriction arrangement may be of the type which is disclosed in EP 2 253 518 B1. The restriction arrangement may thus comprise a piston which is arranged in a cylinder chamber, said piston being displaceable in an extension direction by a pressure applied to said cylinder chamber.

The restriction arrangement may comprise a locking arrangement configured to lock the piston in its extended position. Thereby the vehicle seat will remain its position also after the crash.

The restriction arrangement may be fixedly connected to the seat frame. By being connected to the seat frame, the piston may be oriented to move in a substantially downward direction when moved to its extended position.

The stopper may be arranged on a surface having an extension in a direction transverse to a working direction of the piston. The stopper may be part of, or be arranged at the seat frame as such, be part of an arrangement to support the vehicle seat or even be part of the vehicle body as such.

The seat frame may be adjustable in the longitudinal direction by a slider of the seat frame being slidingly supported by a guiding rail; and the stopper may be part of the slider or the guiding rail, and the restriction arrangement may be fixedly connected to the seat frame.

The stopper may be a part that is mounted to the slider or to the guiding rail, e.g. by bolting, riveting or welding. Alternatively, the stopper may be a portion that is integrally formed with the slider or the guiding rail, such as a flange thereof. The choice depends on the overall design of the vehicle seat as such.

The free end of the piston may be configured to abut the stopper in an area where the stopper overlaps at least one of the slider and the guiding rail. This allows a high strength and a good load distribution and hence a good load absorption.

The slider and/or the guiding rail may have a width that corresponds to or exceeds a width of the stopper and a width of the free end of the piston.

The stopper may have a length as seen along the longitudinal extension of the slider which allows the free end of the piston to abut the stopper in all extreme height and longitudinal adjustment positions of the seat frame.

The piston may be telescopic. A telescopic piston requires a smaller available space for mounting.

The piston may have an available stroke of 30-150 mm and more preferred 35-130 mm. The stroke should be adapted to fit the gap that is formed between the free end of the piston and the stopper in all extreme height and longitudinal adjustment positions of the seat frame.

The piston of the restriction arrangement may be configured to be actuated by a gas pressure to be generated by a gas generator.

The gas generator may be a pyrotechnic gas generator.

According to another aspect of the invention, a vehicle seat is provided with at least one seat restraint system according to any of claims 1-12.

The seat restraint system as such and its advantages have been thoroughly described above. Those arguments are equally applicable to a vehicle seat using such seat restraint system. Thus, in order of avoiding undue repetition, reference is made to the sections above.

The vehicle seat may be used in any type of motorized vehicle.

The vehicle seat may comprise two seat restraint systems which are arranged on two longitudinally opposing sides of the vehicle seat and in a front-end portion thereof. The two seat restraint systems are preferably symmetrically arranged.

The vehicle seat may further comprise a seat belt arrangement which is supported by the vehicle seat. Thereby, a greater freedom is provided to adjust the position of the vehicle seat without compromising on occupant safety.

According to yet another aspect, a method of restraining a pivotal forward movement of the front-end portion of a seat frame is provided. The method comprising the acts of: arranging a restriction arrangement comprising a piston in a position between a front end portion of a seat frame and a stopper; moving, upon an activation signal, the piston from a retracted position to an extended position in which a free end of the piston abuts a stopper, thereby restricting a pivotal movement of a front end portion of the seat frame. The restriction arrangement as such and its advantages have been thoroughly described above. Those arguments are equally applicable to a method of restraining a pivotal forward movement of the front-end portion of a seat frame by using such restriction arrangement.

### BRIEF DESCRIPTION OF THE DRAWINGS

The disclosure will be described in more detail with reference to the appended schematic drawings, which show an example of a presently preferred embodiment of the disclosure.
Fig. 1a shows a schematic side view of a lower portion of a vehicle seat with a seat restraint system according to the invention when the vehicle seat is adjusted to its highest elevated position and to a forward end position.
Fig. 1b discloses the seat restraint system according to Fig. 1a in a condition when the restriction arrangement has been activated.
Fig. 2a shows a schematic side view of a lower portion of a vehicle seat with a seat restraint system according to the invention when the vehicle seat is adjusted to its lowest position and to a rear end position.
Fig. 2b discloses the seat restraint system according to Fig. 2a in a condition when the restriction arrangement has been activated.
Figs. 3a-3c disclose a schematic cross section of the restriction arrangement to illustrate its operation.
Fig. 4a discloses a schematic front view of the restriction arrangement of Fig. 1a.
Fig. 4b discloses a schematic front view of the restriction arrangement of Fig. 1b.
Fig. 5a discloses a schematic front view of the restriction arrangement of Fig. 2a.
Fig. 5b discloses a schematic front view of the restriction arrangement of Fig. 2b.
Fig. 6 discloses a highly schematic cross section of a vehicle seat according to one embodiment of the invention.

### DETAILED DESCRIPTION

The present disclosure will now be described more fully hereinafter with reference to the accompanying drawings, in which currently preferred embodiments of the disclosure are shown. The present disclosure may, however, be embodied in many different forms and should not be construed as limited to the embodiments set forth herein. Rather, these embodiments are provided for thoroughness and completeness, and to fully convey the scope of the disclosure to the skilled addressee. Like reference characters refer to like elements throughout.

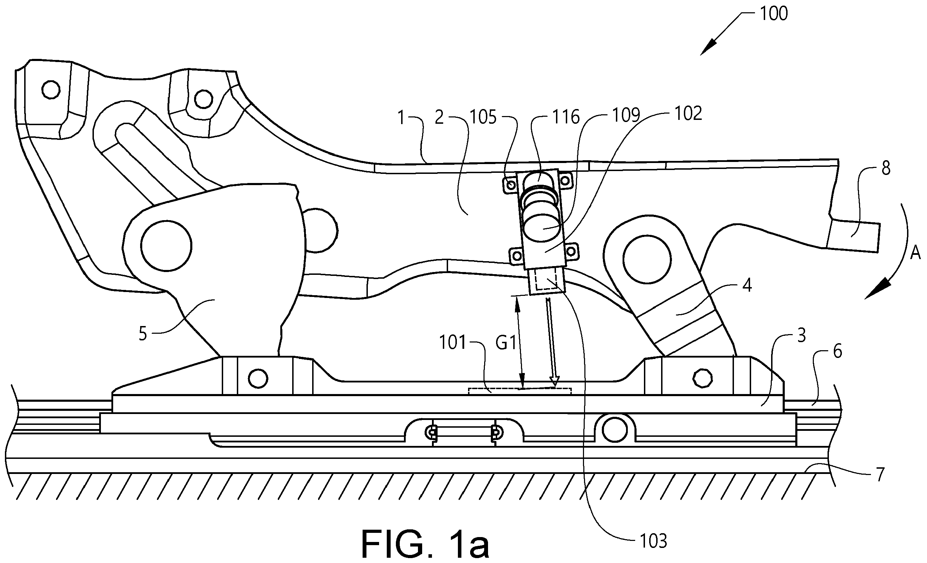

Now turning to Fig. 1a, a schematic side view of a lower portion of a vehicle seat 1 with a seat restraint system 100 according to the invention is disclosed. To facilitate the understanding of the invention the vehicle seat 1 is disclosed highly schematically. The vehicle seat 1, which as such is well known in the art, comprises a seat frame 2. The vehicle seat 1 is adjustable in the height direction and in the longitudinal direction. To allow the adjustment, the seat frame 2 is connected to a slider 3, typically in the form of a sliding rail, via a front link arm 4 and a rear link arm 5. The slider 3 is in turn slidingly received in a guiding rail 6. The guiding rail 6 is typically directly, or indirectly connected to the floor of a vehicle body 7.

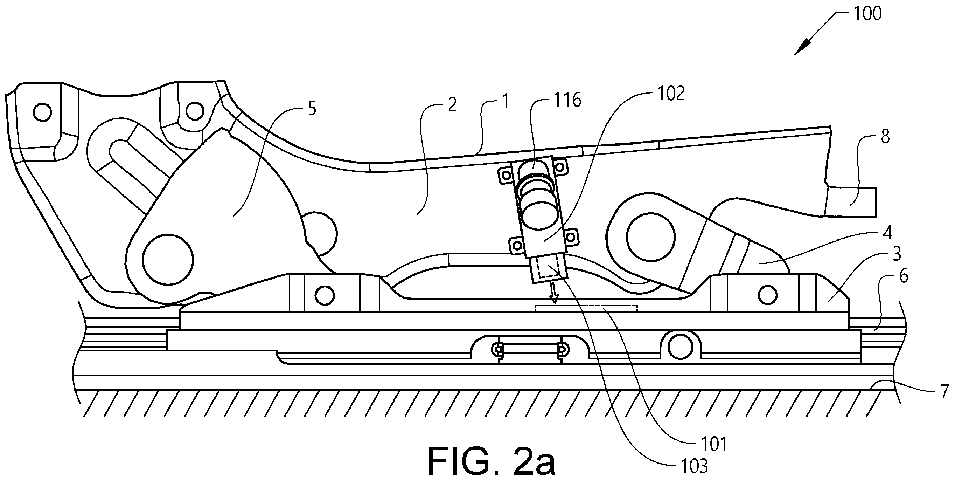

The vehicle seat 1 is adjustable in the longitudinal direction between a front-end position, see Fig. 1a and a rear end position, see Fig. 2a, by the slider 3 being slidingly received in the guiding rail 6. Further, the vehicle seat 1 is adjustable in the height direction between an upper most elevated position as shown in Fig 1a and a lower most position as shown in Fig. 2a. The height adjustment is allowed by the front link arm 4 and the rear link arm 5 each being hingedly connected to the seat frame 2 and to the slider 3 respectively.

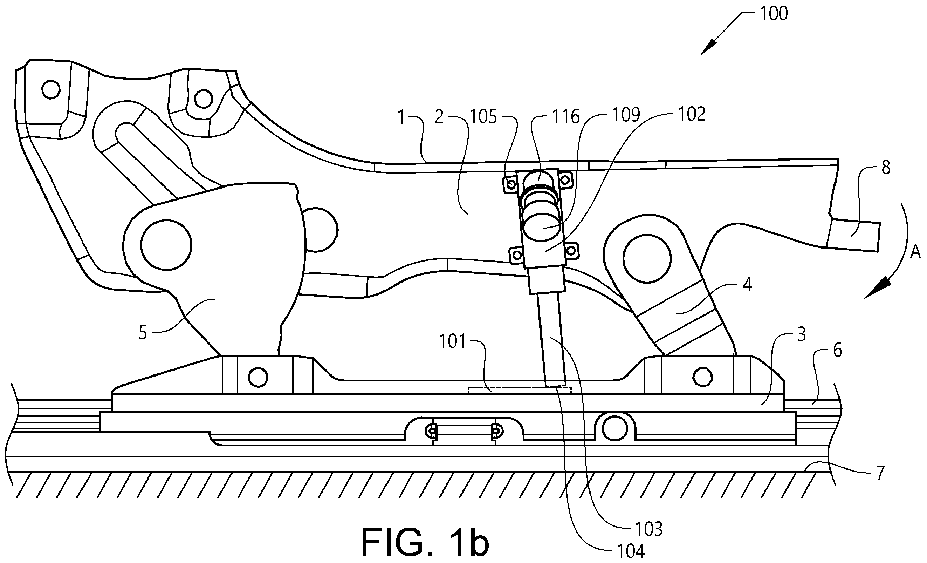

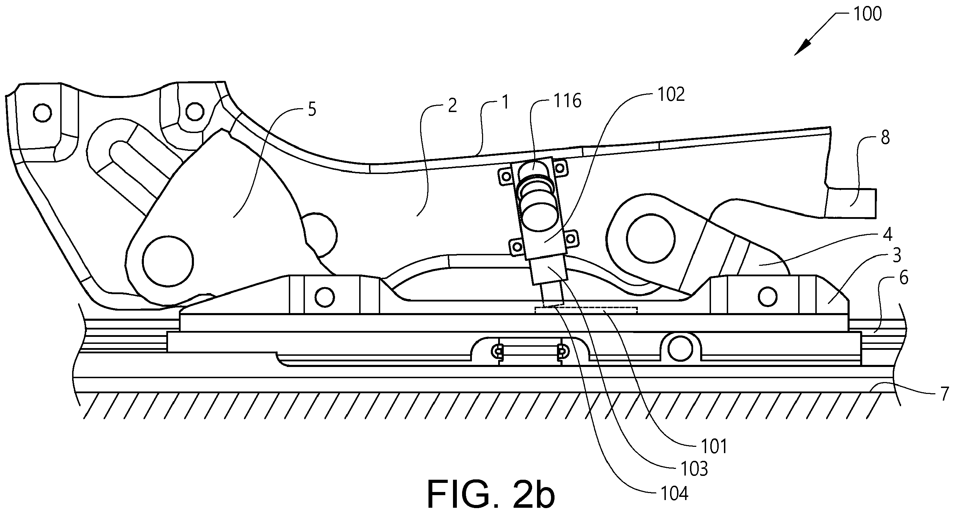

Now turning to Fig. 1a anew. The vehicle seat 1 is provided with a seat restraint system 100 according to the invention. The seat restraint system 100 comprises a stopper 101 and a restriction arrangement 102. The restriction arrangement 102, which will be further described below, comprises a piston 103. The restriction arrangement 102 is configured to, upon an activation signal, move the piston 103 from a retracted position, see Figs. 1a and 2a, to an extended position, see Figs. 1b and 2b, in which extended position a free end 104 of the piston 103 abuts the stopper 101. The abutment between the free end 104 of the piston 103 and the stopper 101 is used to restrict a pivotal forward movement of a front-end portion 8 of the seat frame 2 and hence of the vehicle seat 1 during a frontal crash. This will be further discussed below.

The restriction arrangement 102 is disclosed, see Fig. 1a, as being fixedly connected to the seat frame 2. The fixation is disclosed as being made by a bracket 105 which is bolted to the seat frame 2. By being connected to seat frame 2, the piston 103 is oriented to move in a substantially downward direction when moved from its retracted position to its extended position. The skilled person realizes that the restriction arrangement may be fixed in a number of ways within the scope of the invention. Thus, the use of a bracket 105 is a non-limiting example.

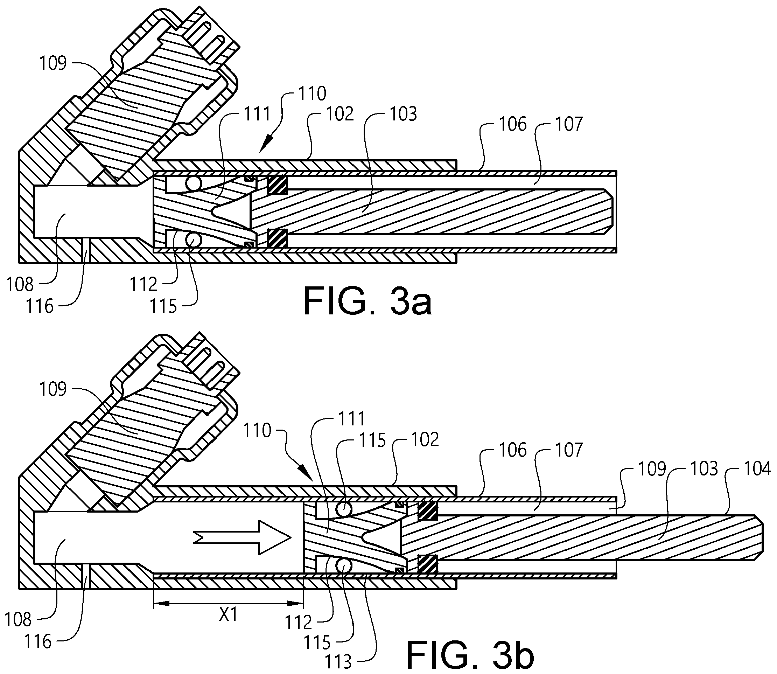

Now turning to Fig. 3a, one embodiment of a restriction arrangement 102 is disclosed highly schematically. The restriction arrangement 102 comprises a driver 111 which abuts the rear end of the piston 103. The driver 111 may be a separate member or be an integral part of the piston 103. The driver 111 and the piston 103 are arranged in a tube 106 which forms a cylinder chamber 107. The cylinder chamber 107 serves as a guide for the piston 103 during actuation thereof. It is preferred that the driver 111 and the piston 103 have a substantially linear movement inside the cylindrical chamber 107.

The cylinder chamber 107 is arranged in communication with a gas chamber 108 which in turn is connected to a gas generator 109. The driver 111 and the piston 103 are configured to be actuated by a gas pressure which is generated by the gas generator 109. The gas generator 109 may by way of example be a pyrotechnic gas generator. The driver 111 and the piston 103 are in Fig. 3a disclosed in their retracted position, i.e. contained in the cylinder chamber 107. This position is the default, non-activated position of the restriction arrangement 102.

The piston 103 is configured, upon activation of the restriction arrangement 102, to be longitudinally displaced to an extended position, see Fig. 3b, in which the piston 103 is longitidinally moved in view of the cylinder chamber 107 so that the free end 104 of the piston 103 projects past a mouth 109 of the cylinder chamber 107. The activation may be triggered by an activation signal from a crach sensor that indicates a frontal crash.

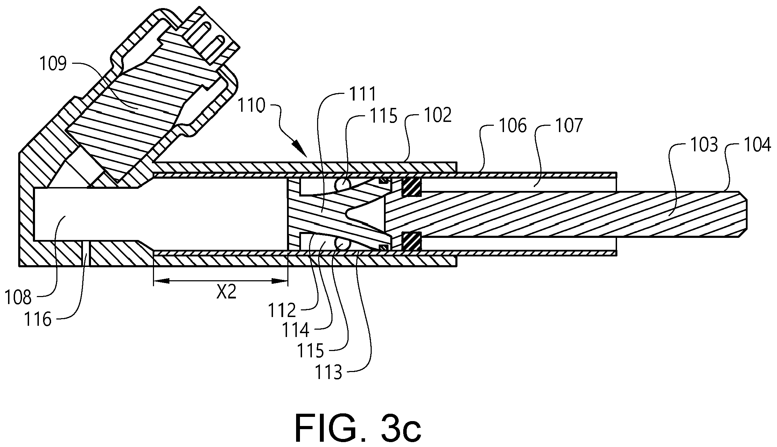

Now turning to Fig. 3c. The driver 111 with the piston 103 is configured to be locked in the extended position so that the piston 103 acts as a support strut which allows the vehicle seat 1 to remain its extended position also after a crash. The locking is provided for by a locking arrangement 110.

The locking arrangement 110 is in the disclosed embodiment provided by the driver 111 which is arranged in the cylinder chamber 107 in the rear end of the piston 103. The driver 111 comprises a wedge-shaped envelope surface 112. The wedge-shaped envelope surface 112 together with the inner wall 113 of the cylinder chamber 107 defines a compartment 114 which receives a plurality of balls 115.

Now turning to Fig. 3a anew. When activating the retraction arrangement 102, the gas generator 109 is activated to thereby generate a flow of pressurized gas which enters the gas chamber 108. The pressure displaces the driver 111 and hence also the piston 103 in the longitudinal direction, see distance X1 in Fig. 3b. Thereby the piston 103 is moved to its extended position. During this displacement, the balls 115 will move along. After activation, the gas will be vented from the gas chamber 108 via a vent hole 116. As the gas pressure in the gas chamber 107 is relieved, the driver 111 with the piston 103 will be forced in the opposite direction due to the weight of the vehicle seat and the passenger. To restrict such inward movement of the piston 103, the balls 115 will during such opposite movement of the driver 111 and the piston 103, see Fig. 3c, wedgingly engage the wedge-shaped envelope surface 112 of the driver 111 and the inner wall 113 of the cylinder chamber 107, thereby preventing the driver 111 and the piston 103 from being fully retracted. The piston 103 will thereby stay in an extended position and continue to act as a support strut even after the crash. The displacement of the driver 111 and the piston 103 into its locked position is illustrated as X2 in Fig. 3c. The displacement X2 is measured in view of the non-activated position of the restriction arrangement 102, and hence in view of the the fully retracted position of the driver 111. It is understood that the displacement X2, as a consequence of the locking arrangement 110 is smaller than the displacement X1.

The piston 103 may have an available stroke of 30-150 mm and more preferred 35-130 mm. The stroke should be adapted to fit all extreme height and longitudinal adjustment positions of the seat frame 2 and hence be able to fill a gap G1 that is formed between the free end 104 of the piston 103 and the stopper 101 no matter adjustment position. The gap G1 is illustrated in Fig. 1a.

The piston 103 is in its easiest form provided as a rod. It is however understood that the piston 103 in some embodiments may be telescopic. A telescopic piston 103 requires a smaller available space for the mounting of the restriction arrangement 102.

As given above, the restriction arrangement 102 comprises the bracket 105 that is configured to allow the restriction arrangement 102 to be mounted to the seat frame 2 or to any other support. The mounting may be made by e.g. bolting or welding. Since the loads are expected to be very high, it is suggested that the restriction arrangement 102 is mounted with three or more fixation points.

A rear end portion 116 of the restriction arrangement 102 may be flat to allow the restriction arrangement 102 to take support from the seat frame 2.

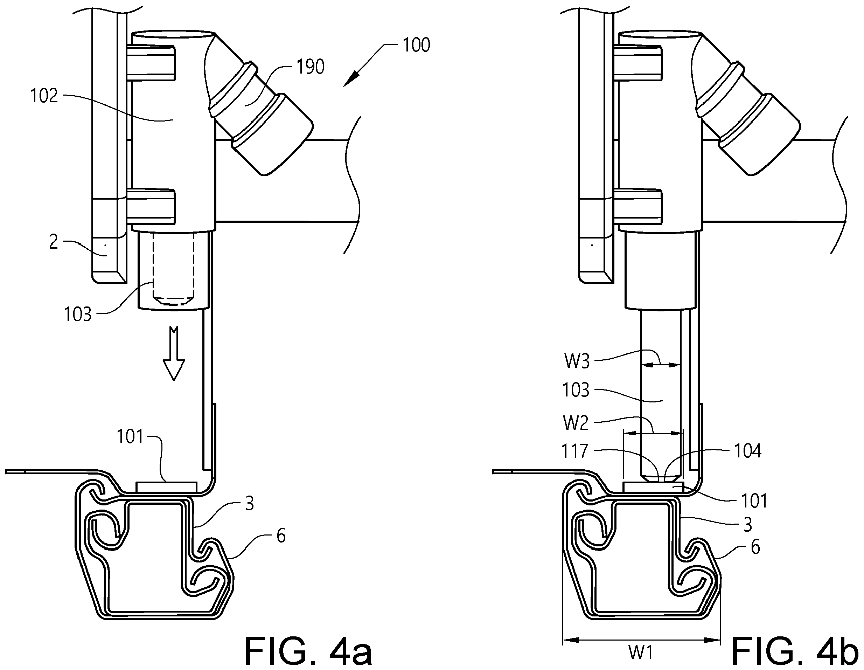

Now turning to Figs. 1a, 4a and 4b. Fig. 1a is a schematic side view of the vehicle seat 1. Fig. 4a and 4b are a schematic cross section of the seat frame 2 to better illustrate the interface between the stopper 101, the slider 3 and the guiding rail 6, and also the engagement between the piston 103 and the stopper 101.

The slider 3 supports the stopper 101. The stopper 101 is disclosed as being arranged on an upper surface of the slider 3 facing away from the guiding rail 6. The stopper 101 may be a part, such as a strip-shaped member, that is mounted to the slider 3. The stopper 101 is preferably made of a rigid material such as metal or a composite material. The stopper 101 may be mounted to the slider 3 by e.g. bolting, riveting or welding. In an alternative solution, not illustrated, the stopper 101 may be mounted to the guiding rail 6.

As an alternative to the stopper 101 being a member mounted to the slider 3 or to the guiding rail 6, the stopper 101 may be integrally formed therewith. The stopper 101 may be formed by a flange of the slider 3 or by a flange of the guiding rail 6.

The choice of position, mounting and form of the stopper 101 depends on the overall design of the vehicle seat 1 and its seat frame 2. The skilled person is well aware of that different manufacturers have different designs on their vehicle seats 1.

The stopper 101 is disclosed as being arranged on a surface of the slider 3 which has an extension in a direction substantially transverse to the working direction of the piston 103.

It is preferred that the free end 104 of the piston 102 is configured to abut the stopper 101 in an area where the stopper 101 overlaps at least one of the slider 3 and the guiding rail 6. This allows a high strength and a good load distribution and hence load absorption when the piston 103 is moved to its extended position which is illustrated in Fig. 4b.

It is preferred that the slider 3 and/or the guiding rail 6 have a width W1 that corresponds to or exceeds a width W2 of the stopper 101 and a width W3 of the free end 104 of the piston 102. It is also preferred that the width W2 of the stopper is larger than the width W3 of the piston 103.

The free end 104 of the piston 103 comprises a load distributing abutment portion 117. The abutment portion 117 may be formed by the free end 104 of the piston 103 as is disclosed in Fig. 4b. Alternatively, the abutment portion 117 may be formed as a pivotably arranged member (not illustrated) which is attached to the free end 104 of the piston 103. A pivotal arrangement allows a better abutment in the event the stopper 101 should not have a major surface which is perpendicular to the longitudinal extension of the piston 103.

No matter mounting and form, it is preferred that the stopper 101 is arranged in a position where the slider 3 longitudinally overlaps the guiding rail 6 no matter if the vehicle seat 1 is adjusted to its rear end position, to its front end position, to its highest position or to its lowest position. Thus, it is preferred that the stopper 101 has a length as seen along the longitudinal extension of the slider 3 which allows the free end of the piston 103 to abut the stopper 101 in all extreme height and longitudinal adjustment positions of the seat frame 2 and hence of the vehicle seat 1. This is illustrated in Fig. 1b where the vehicle seat 1 is set to its highest position and in its most rear position. As is seen in this Figure, the free end 104 of the piston 103 will abut the front end of the stopper 101. Correspondingly, in Fig. 2b, the vehicle seat 1 is instead set to its lowest position and in its forward end position. In this position, the free end 104 of the piston 103 will instead abut the rear end of the stopper 101.

It is preferred that the restriction arrangement 102 is mounted to an inner side surface of the seat frame 2, i.e. on a side of the seat frame 2 that faces a longitudinal centreline of the vehicle. This allows a good protection of the restriction arrangement 102 during ordinary use of the vehicle seat 1.

In the following the operation of the seat restraint system 100 will be discussed.

Starting with Fig.1a and 4a, the vehicle seat 1 is disclosed as being adjusted to its highest position and in its most rear position. Also, the restriction arrangement 102 is in its default position with the piston 103 fully retracted in the cylinder chamber 107.

In the event the Electronic Control Unit (ECU) (not illustrated) of the vehicle via a crash sensor and processor integrated in the ECU should determine that there is an emergency situation to be responded to, such as a frontal crash, an activation signal is communicated to the seat restraint system 100. In response to such activation signal, the restriction arrangement 102 is activated. Upon activation, the gas generator 109 of the restriction arrangement 102 is activated, whereby a volume of pressurized gas is developed which causes the piston 103 to be moved from its retracted position to its extended position, see Figs. 1b and 4b. In this fully extended position, the free end 104 of the piston 103 abuts the stopper 101. The piston 103 may in its extended position be seen as a supporting strut which forms a physical stop, mainly in the Z-direction of the vehicle. Thereby a pivotal forward movement of the front-end portion 8 of the seat frame 2 is restricted. The pivotal movement is schematically illustrated by arrow A in Fig 1a. As the gas is vented from the gas chamber, the piston 103 will retract somewhat into a locked position in which the locking arrangement 110 prevents any further retraction. Hence, the piston 103 will continue to act as a supporting strut also after the crash.

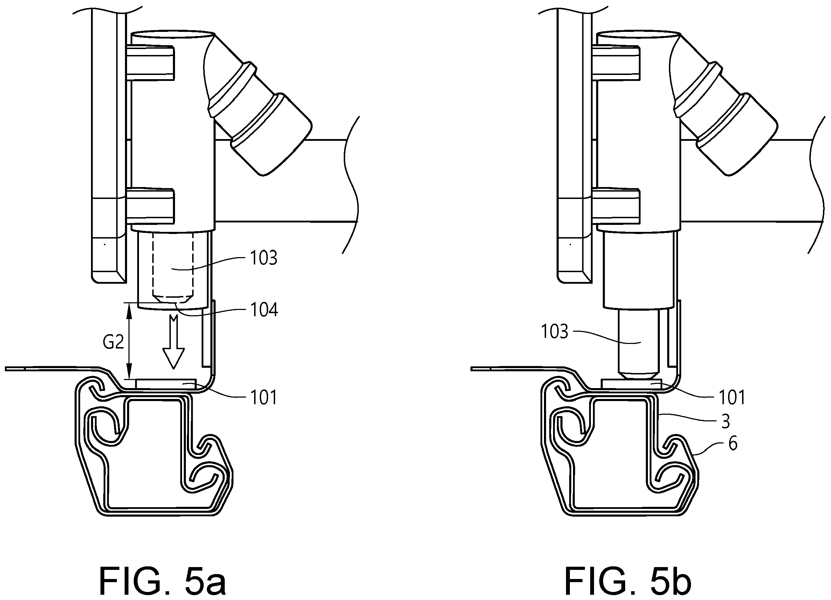

The piston 103 may have an available stroke of 30-150 mm and more preferred 35-130 mm. The stroke should be adapted to fit all extreme height and longitudinal adjustment positions of the seat frame 2. One such extreme position is disclosed in Figs 1a, 1b and 4a, 4b where the vehicle seat 1 is set to its highest position while at the same time being adjusted longitudinally to a rear position. Another such extreme position is disclosed in Figs. 2a, 2b and 5a, 5b where the vehicle seat 1 is set to its lowest position while at the same time being adjusted longitudinally to a front-end position. No matter how the vehicle seat 1 is adjusted, the piston 103 should always be sufficiently long to reach the stopper 101. Further, the free end 104 of the piston 103 should always be able to abut a portion of the stopper 101 in a position where the slider 3 overlaps the guiding rail 6.

Now referring to Fig. 5a which discloses the vehicle seat 1 when set to its lowest and most rear position. There is a gap G2 between the free end 104 of the piston 103 and the stopper 101 as seen in the piston's 103 retracted position. Depending on the overall design of the vehicle seat 1 and the vehicle body 7, this gap G2 may be substantially omitted with remained function. It is to be understood that a gap, although small, must be present in order to allow a friction-free adjustment of the vehicle seat 1.

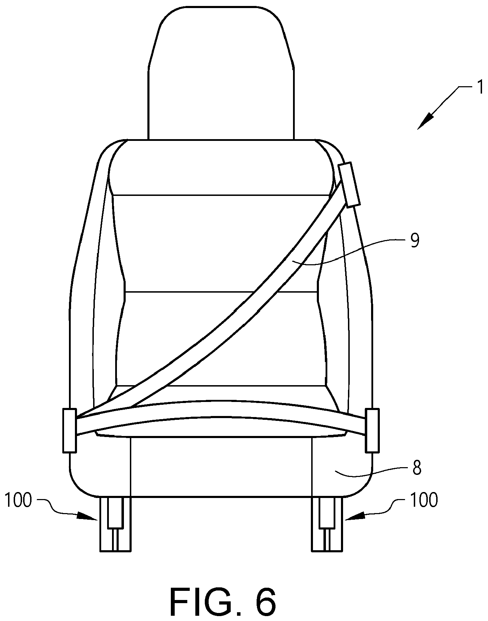

Now turning to Fig. 6. It is preferred that a vehicle seat 1 comprises two seat restraint systems 100 which are arranged on two longitudinally opposing sides of the vehicle seat 1. The two seat restraint systems 100 are preferably symmetrically arranged. It is also preferred that the seat restraint system 100, no matter one or two, or even more, is arranged in a front-end portion 8 of the vehicle seat 1 in an area below the thighs of a seating occupant. The vehicle seat 1 may further comprise a seat belt arrangement 9 which is supported by the vehicle seat 1. This is also known as a Belt-in-Seat technology.

The skilled person realises that a number of modifications of the embodiments described herein are possible without departing from the scope of the disclosure, which is defined in the appended claims.

Although the restriction arrangement throughout the disclosure is illustrated as being arranged to operate in a downward direction, the skilled person realises that the restriction arrangement 102 with remained function instead may be arranged to operate in the upward direction. In such case, the restriction arrangement 102 may be fixedly supported by the vehicle body 7 or the guiding rail 6 and the stopper 101 be arranged in the seat frame 2.

The seat restraint system 100 may be combined with a separate restraint system (not illustrated) that is configured to reduce the movement of the rear end of the vehicle seat 1 in the event of a frontal crash. The two systems may be configured to be activated simultaneously.

## Claims

1. A seat restraint system for use in a vehicle seat, the system comprising a vehicle seat (1) comprising a seat frame (2) which is adjustable in a height direction and in a longitudinal direction; and the system being **characterized in that** it further comprises
a restriction arrangement (102) comprising a piston (103); wherein
the restriction arrangement (102) is configured to, upon an activation signal, move the piston (103) from a retracted position to an extended position in which a free end of the piston (103) abuts a stopper (101), thereby restricting a pivotal movement of a front-end portion (104) of the seat frame (2).

2. The seat restraint system according to claim 1, wherein the restriction arrangement (102) comprises a locking arrangement (110) configured to lock the piston (103) in its extended position.

3. The seat restraint system according to claim 1, wherein the restriction arrangement (102) is fixedly connected to seat frame (2).

4. The seat restraint system according to claim 1, wherein the stopper (101) is arranged on a surface having an extension in a direction transverse to a working direction of the piston (103).

5. The seat restraint system according to claim 1, wherein the seat frame (2) is adjustable in the longitudinal direction by a slider (3) of the seat frame (2) being slidingly supported by a guiding rail (6); and
wherein the stopper (101) is part of the slider (3) or the guiding rail (6), and the restriction arrangement (102) is fixedly connected to the seat frame (2).

6. The seat restraint system according to claim 5, wherein the free end (104) of the piston (103) is configured to abut the stopper (101) in an area where the stopper (101) overlaps at least one of the slider (3) and the guiding rail (6).

7. The seat restraint system according to claim 5 or 6, wherein the slider (3) and/or the guiding rail (6) has a width W1 that corresponds to or exceeds a width W2 of the stopper (101) and a width W3 of the free end of the piston (103).

8. The seat restraint system according to any of claims 5 to 7, wherein the stopper (101) has a length as seen along the longitudinal extension of the slider (3) which allows the free end of the piston (103) to abut the stopper (101) in all extreme height and longitudinal adjustment positions of the seat frame (2).

9. The seat restraint system according to any of the preceding claims,
wherein the piston (103) is telescopic.

10. The seat restraint system according to any of the preceding claims,
wherein the piston (103) has an available stroke of 30-150 mm and more preferred 35-130 mm.

11. The seat restraint system according to any of the preceding claims,
wherein the piston (103) of the restriction arrangement (102) is configured to be actuated by a gas pressure generated by a gas generator (109).

12. The seat restraint system according to claim 10, wherein the gas generator (109) is a pyrotechnic gas generator.

13. A vehicle seat (1) **characterized in that** it is provided with at least one seat restraint system (100) according to any of claims 1-12.

14. The vehicle seat according to claim 13, comprising two seat restraint systems being arranged on two longitudinally opposing sides of the vehicle seat and in a front-end portion thereof.

15. A vehicle seat according to claim 13 or 14, further comprising a seat belt arrangement supported by the vehicle seat (1).

16. A method of restraining a pivotal forward movement of the front-end portion of a seat frame (2), the method being **characterized by** the acts of:
arranging a restriction arrangement (102) comprising a piston (103) in a position between a front-end portion (104) of a seat frame (2) and a stopper (101);
moving, upon an activation signal, the piston (103) from a retracted position to an extended position in which a free end of the piston (103) abuts a stopper (101), thereby restricting a pivotal movement of a front end portion (104) of the seat frame (2).
